# EUROPÄISCHE PATENTANMELDUNG

(11) **EP 0 544 068 A2**
(43) Veröffentlichungstag der Anmeldung: **02.06.1993**
(21) Anmeldenummer: 92115120.5
(22) Anmeldetag: 04.09.1992
(51) Int. Cl.: B01J 2/04, B01J 2/06, C23C 4/12, B22F 9/08

(54) **Verfahren und Vorrichtung zur Herstellung von Pulvern**

(30) Priorität: 01.10.1991 DE 4132693
(71) Anmelder: MESSER GRIESHEIM GMBH, D-60270 Frankfurt (DE)
(72) Erfinder: Gross, Gerhard, Dr., W-4156 Willich 4 (DE); Meier, Birgitta, W-4130 Moers 2 (DE); Vetter, Johannes, Dr., W-4156 Willich 2 (DE)

(57) **Zusammenfassung**

Um bei einem Verfahren zur Herstellung von Pulvern aus geschmolzenen Stoffen durch Verdüsen der Schmelze zu Partikeln in einem Verdüsungsturm mittels eines tiefsiedenden Gases, das sowohl in gasförmiger als auch in flüssiger Phase zugeführt wird, den Verbrauch an tiefsiedendem Gas in gasförmiger Phase zu reduzieren/minimieren, wird erfindungsgemäß vorgeschlagen, daß das nach dem Verdüsen im Verdüsungsturm in gasförmiger Phase vorhandene Gas dem Verdüsungsturm entnommen und in einem Speicher (20) gesammelt wird.

## Beschreibung

Die Erfindung betrifft ein Verfahren und eine Vorrichtung zur Herstellung von Pulvern nach dem Oberbegriff des Anspruches 1 bzw. 5.

Aus der PCT-Patentanmeldung WO 89/12116 ist ein Pulverherstellungsverfahren bekannt, bei dem die Schmelze zunächst von einem tiefsiedenden Verdüsungsgas zerstäubt/verdüst wird und danach die entstandenen Pulverpartikel von einem tiefsiedenden Kühlgas in flüssiger Phase beaufschlagt werden.

Aufgabe der vorliegenden Erfindung ist es, bei diesem Verfahren den Verbrauch an tiefsiedendem Gas in gasförmiger Phase zu reduzieren bzw. mintmieren.

Erfindungsgemäß wird diese Aufgabe mit den im kennzeichnenden Teil des Anspruches 1 angegebenen Merkmalen gelöst.

Vorteilhafte Weiterbildungen sowie eine besonders günstige Vorrichtung nach der Erfindung sind in den Ansprüchen 2 bis 8 angegeben.

Gemäß der Erfindung wird das im Verdüsungsturm vorhandene Gas in gasförmiger Phase ( ./. Summe aus Zerstäubungsgas und verdampften Kühlgas) gesammelt und rückgeführt. Dadurch wird die zur Zerstäubung/Verdüsung benötigte Gasmenge, insbesondere durch die doppelte Nutzung des Kühlgases als Kühlmedium und danach als Verdüsungsmedium sowie durch die Kreislaufführung wesentlich reduziert.

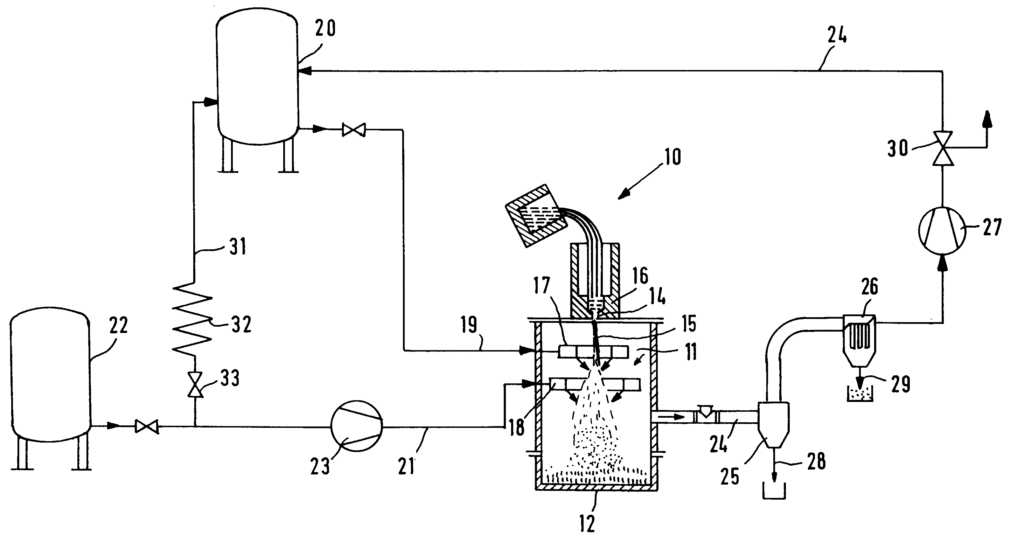

In der Zeichnung ist eine Schmelzvorrichtung mit 10, eine Zerstäubungsvorrichtung mit 11 sowie ein der Zerstäubungsvorrichtung 11 zugeordneter und mit der Schmelzvorrichtung 10 verbundener Verdüsungsturm mit 12 gekennzeichnet.

In der Schmelzvorrichtung 10 wird auf ca. 900°C bis 1700°C erhitztes Metall durch einen Auslauf 14 auf einen Durchmesser von 1 bis 20 mm geformt und fällt als Metallstrahl 15 in den Verdüsungsturm 12. Das Metall wird dabei entweder in einem separaten Ofen geschmolzen und in den Tundish 16 abgegossen oder direkt in dem als Ofen ausgebildeten Tundish geschmolzen und erhitzt.

Die Zerstäubungsvorrichtung 11 weist eine Primärdüse 17 sowie eine Sekundärdüse 18 auf. Dabei ist die Primärdüse 17 an eine Ausgangsleitung 19 eines Speichers 20 angeschlossen, aus dem tiefsiedendes Gas in gasförmiger Phase entnommen und der Sekundärdüse 18 zugeführt wird. Die Sekundärdüse 18 ist über eine isolierte Ausgangsleitung 21 mit einem Kältetank 22 verbunden. Aus diesem wird das tiefsiedende verflüssigte Gas direkt oder unter Zwischenschaltung einer Pumpe 23 der Sekundärdüse 18 zugeführt.

Im Verdüsungsturm 12 wird der Metallstrahl 15 durch den mit hohem Druck durch die Primärdüse 17 in gasförmiger Phase eingebrachten Stickstoff zerstäubt und durch tiefkalt verflüssigten Stickstoff aus der Sekundärdüse 18 gekühlt, der hierbei verdampft.

An den Verdüsungsturm 12 ist eine Rückführleitung 24 angeschlossen, in der ein Zyklon 25, ein Filter 26 sowie ein Verdichter 27 vorgesehen sind. Ausgangsseitig ist die Rückführleitung 24 mit dem Speicher 20 verbunden.

Das nach dem Verdüsen im Verdüsungsturm 12 vorhandene mit Metallstaub beladene Gas in gasförmiger Phase wird in dem Zyklon 25 und dem Filter 26 gereinigt, wobei über Leitungen 28 bzw. 29 der Metallstaub entnommen wird. Durch den Verdichter (Kompressor) 27 wird das gereinigte Gas verdichtet und im Speicher 20 gesammelt. Das dem Verdichter 27 nachgeschaltete Überströmventil ist mit 30 bezeichnet. Vom Speicher 20 gelangt über die Leitung 19 das rückgeführte Gas wieder in den Turm 12 zur Primärdüse 17, wodurch ein kontinuierlicher Gaskreislauf während der Pulverherstellung erreicht wird.

Der Speicher 20 ist ferner über eine Speiseleitung 31, in der ein Verdampfer 32 sowie ein Ventil 33 angeordnet sind, mit dem Kältetank 22 verbunden.

Zum Starten der Verdüsung sind zwei Verfahrensweisen möglich:
1. Der flüssige Stickstoff aus dem Kältetank 22 wird vor Verdüsungsbeginn zum Kaltfahren und Spülen der Anlage benutzt. Der im Turm 12 verdampfende Stickstoff gelangt durch Zyklon, Filter und Kompressor in den Speicher 20 und füllt diesen. Sobald sich im Speicher 20 ein hinreichend hoher Druck aufgebaut hat, kann mit der Verdüsung begonnen werden.
2. Wenn ein Spülen (und Kaltfahren) der Anlage nicht erforderlich ist, wird der Speicher 20 entweder direkt oder über die Speiseleitung 31 mit Luftverdampfer aus dem Kältetank 22 befüllt. Speicher 20 und Kältetank 22 werden dann unmittelbar vor Verdüsungsbeginn geöffnet.
   Da zu dem im Kreislauf gefahrenen Gas ständig neues kaltes Gas hinzukommt, ist eine zusätzliche Kühlung des Kreislaufgases nicht notwendig.
   Das überschüssige Gas kann durch das Überströmventil 30 entweichen.

## Patentansprüche

1. Verfahren zur Herstellung von Pulvern aus geschmolzenen Stoffen durch Verdüsen der Schmelze zu Partikeln in einem Verdüsungsturm mittels eines tiefsiedenden Gases, das sowohl in gasförmiger als auch in flüssiger Phase zugeführt wird,
dadurch gekennzeichnet,
daß das nach dem Verdüsen im Verdüsungsturm in gasförmiger Phase vorhandene Gas dem Verdüsungsturm entnommen und in einem Speicher gesammelt wird.

2. Verfahren nach Anspruch 1,
dadurch gekennzeichnet,
daß zum Verdüsen das tiefsiedende Gas in gasförmiger Phase dem Speicher entnommen wird.

3. Verfahren nach Anspruch 1 oder 2,
dadurch gekennzeichnet,
daß das tiefsiedende Gas Stickstoff oder Argon ist.

4. Verfahren nach einem der Ansprüche 1 bis 3,
dadurch gekennzeichnet,
daß das dem Verdüsungsturm entnommene Gas gefiltert und verdichtet wird.

5. Vorrichtung zur Herstellung von Pulvern mit einer Schmelzvorrichtung, einer Zerstäubungsvorrichtung, die eine Primärdüse zur Zufuhr eines tiefsiedenden Gases in gasförmiger Phase und eine Sekundärdüse zur Zufuhr eines tiefsiedenden Gases in flüssiger Phase aufweist sowie einem der Zerstäubungsvorrichtung zugeordneten und an die Schmelzvorrichtung angesetzten Verdüsungsturm,
dadurch gekennzeichnet,
daß an den Verdüsungsturm (12) eine Rückführleitung (24) zum Rückführen von in gasförmiger Phase im Verdüsungsturm (12) vorhandenen Gas angeschlossen ist.

6. Vorichtung nach Anspruch 5,
dadurch gekennzeichnet,
daß in der Rückführleitung (24) ein Zyklon (25), ein Filter (26) sowie ein Verdichter (27) vorgesehen sind.

7. Verfahren nach Anspruch 5 oder 6,
dadurch gekennzeichnet,
daß die Rückführleitung (24) ausgangsseitig mit einem Speicher (20) verbunden ist, dessen Ausgangsleitung (19) an die Primärdüse (17) angeschlossen ist.

8. Verfahren nach einem der Ansprüche 5 bis 7,
dadurch gekennzeichnet,
daß der Speicher (20) über eine Speiseleitung (31) mit einem Kältetank (22) verbunden ist, dessen Ausgangsleitung (21) an die Sekundärdüse (18) angeschlossen ist.
